# EUROPEAN PATENT APPLICATION

(11) **EP 4 624 151 A1**
(43) Date of publication of application: **01.10.2025**
(21) Application number: 25165056.0
(22) Date of filing: 20.03.2025
(51) Int. Cl.: B32B 15/14, B32B 3/08, B32B 5/02, B32B 7/022, B32B 7/12, B32B 15/18

(54) **BOTTOM GUARD PLATE AND BATTERY BOX**

(30) Priority: 25.03.2024 CN 202420589608 U; 30.08.2024 WO PCT/CN2024/115855
(71) Applicant: Eve Energy Co., Ltd., Huizhou, Guangdong 516006 (CN)
(72) Inventor: HUANG, Shenhua, Huizhou, Guangdong, 516006 (CN); ZHANG, Guojiang, Huizhou, Guangdong, 516006 (CN)
(74) Representative: Berggren Oy

(57) **Abstract**

A bottom guard plate and battery box are provided in the present application. The bottom guard plate includes an upper skin; a lower skin spaced from the upper skin; an interlayer sandwiched between the upper skin and the lower skin. A thickness of the upper skin is greater than a thickness of the lower skin.

## Description

### TECHNICAL FIELD

The present application relates to the technical field of batteries, and more particularly, to a bottom guard plate and a battery box.

### BACKGROUND

In the field of battery technology, it is often necessary to use a bottom guard plate to protect a power battery from being impacted by an external foreign body during driving of a vehicle.

In the related art, the bottom guard plate is generally an integrally die-casting aluminum alloy plate or an integrally die-casting steel plate.

### SUMMARY

However, the integrally die-casting bottom guard plate is not only expensive to manufacture, but also has poor impact resistance. When subjected to an external impact force, the bottom guard plate tends to be easily deformed, which may cause damage to the inner battery cell.

The application provides a bottom guard plate. The bottom guard plate includes an upper skin; a lower skin spaced from the upper skin; an interlayer sandwiched between the upper skin and the lower skin; in which a thickness of the upper skin is greater than a thickness of the lower skin.

The application also provides a battery box. The battery box includes the above-mentioned bottom guard plate.

### BENEFICIAL EFFECT

The bottom guard plate provided in the present application forms a bottom guard plate of a multilayer structure based on an upper skin, a interlayer, and a lower skin, thereby improving the strength of the bottom guard plate and enhancing impact and deformation resistance of the bottom guard plate. By making the thickness of the upper skin larger than the thickness of the lower skin, on the one hand, the upper skin can better resist deformation in the thickness direction, ensuring that the bottom guard plate can meet the use requirements; and on the other hand, the use amount of the material of the lower skin can be reduced, so that the bottom guard plate as a whole is thinner and lighter. As a result, the overall strength of the bottom guard plate is ensured to meet the requirements, while the production cost thereof is reduced.

### BRIEF DESCRIPTION OF THE DRAWINGS

FIG. 1 is a perspective view of a bottom guard plate according to embodiments of the present application.
FIG. 2 is a schematic diagram of an explosive structure of a bottom guard plate according to embodiments of the present application.
FIG. 3 is a schematic structural diagram of a bottom guard plate subjected to stress deformation according to embodiments of the present application.
FIG. 4 is a schematic structural diagram of a bottom guard plate subjected to stress deformation according to embodiments of the present application.

### Reference signs:

10. upper skin; 20. lower skin; 30. interlayer; and 40. buffer portion.

### DETAILED DESCRIPTION

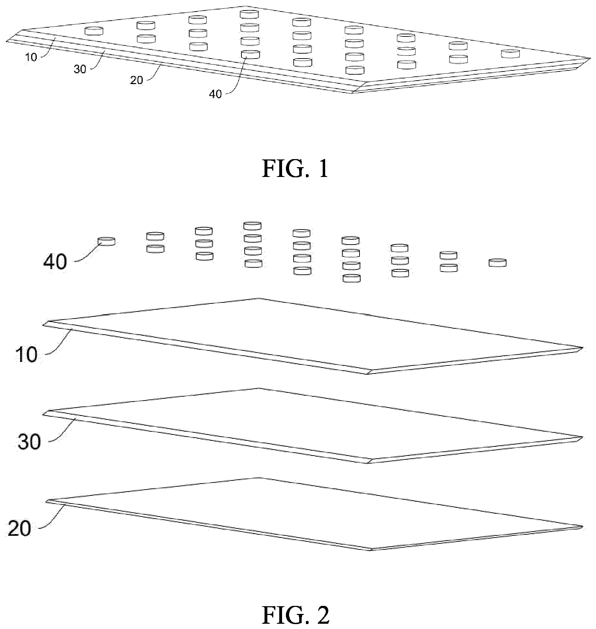

Referring to FIGS. 1-4, embodiments of the present application provide a bottom guard plate. The bottom guard plate includes an upper skin 10, a lower skin 20, and an interlayer 30. The lower skin 20 is spaced from the upper skin 10. The interlayer 30 is sandwiched between the upper skin 10 and the lower skin 20. A thickness of the upper skin 10 is larger than a thickness of the lower skin 20.

In the embodiments of the present application, the bottom guard plate of the multilayer structure is formed on the basis of the upper skin 10, the interlayer 30, and the lower skin 20, so that the strength of the bottom guard plate is enhanced, and the impact resistance and the deformation resistance of the bottom guard plate is enhanced. Based on the fact that the thickness of the upper skin 10 is larger than the thickness of the lower skin 20, on the one hand, the upper skin 10 is better able to resist deformation in the thickness direction thereof, and thus it is ensured that the bottom guard plate can meet the use requirements; on the other hand, the use amount of the material of the lower skin 20 is reduced, so that the bottom guard plate as a whole is thinner and lighter. Thus, the production cost is reduced while ensuring that the overall strength of the bottom guard plate meets the standard.

It will be appreciated that when the bottom guard plate is subjected to an external impact force, the impact force is first applied to the lower skin 20. If the lower skin 20 can resist deformation caused by the impact force, the bottom guard plate can be prevented from being deformed due to the external impact force. When the lower skin 20 is deformed due to the excessive impact force, the lower skin 20 may consume a portion of the energy of the impact force, thereby reducing the impact force to which the interlayer 30 and the upper skin 10 are subjected, and making the interlayer 30 and the upper skin 10 less susceptible to deformation. Thus, by forming the bottom guard plate of the multi-layer structure, it is possible to gradually attenuate the external impact force, so that the deformation amount of the innermost upper skin 10 is relatively small, and the overall deformation resistance of the bottom guard plate is relatively strong, thereby preventing the battery cell from being damaged.

Moreover, since the thickness of the upper skin 10 is larger than the thickness of the lower skin 20, the interlayer 30 can be positioned at a lower position, so that the interlayer 30 can be more quickly enter into the deformation against the external impact force, thereby ensuring the effect of resisting the deformation in the Z-axis direction. Based on the unequal-thickness structural design, the mechanical properties of the upper skin 10, the interlayer 30, and the lower skin 20 are fully utilized, so that the protective effect of the bottom guard plate with the unequal-thickness structure is better than the protective effect of the bottom guard plate with the equal-thickness structure.

In some embodiments, both the upper skin 10 and the lower skin 20 are resin layers, and the resin layer is embedded with a reticulated fiber structure. Embedding the reticulated fiber structure within the resin layer may form a continuous fiber reinforced resin composite layer. By providing each of the upper skin 10 and the lower skin 20 as a continuous fiber-reinforced resin-based composite layer, and sandwiching the interlayer 30 between the upper skin 10 and the lower skin 20, it is possible to form a bottom guard plate of a multilayer structure to enhance the energy absorbing effect of the bottom guard plate. As a result, the bottom guard plate has good deformation resistance in both the horizontal direction and the thickness direction thereof, and it is ensured that the bottom guard plate has good strength, as well as wear resistance and insulation corrosion resistance.

Using the continuous fiber reinforced resin composite layer as the upper skin 10 and the lower skin 20, the density of both the upper skin 10 and the lower skin 20 can reach 2150 kg/m³ (kilograms per cubic meter), and has excellent tensile strength. When the bottom guard plate is deformed due to the stress, the upper skin 10 and the lower skin 20 may exhibit good deformation resistance in the XY direction (i.e., the horizontal direction), and may also exhibit good deformation resistance in the Z-axis direction (i.e., the thickness direction) to prevent the battery cell from being damaged.

It will be appreciated that when the bottom guard plate is deformed due to the impact of an external force, the action force is transmitted from the lower skin 20 to the upper skin 10, and the reticulated fiber structure can disperse the action force in the XY direction so that the deformation in the Z-axis direction is smaller. Since the thickness of the upper skin 10 is larger, the upper skin 10 can better resist deformation in the Z-axis direction.

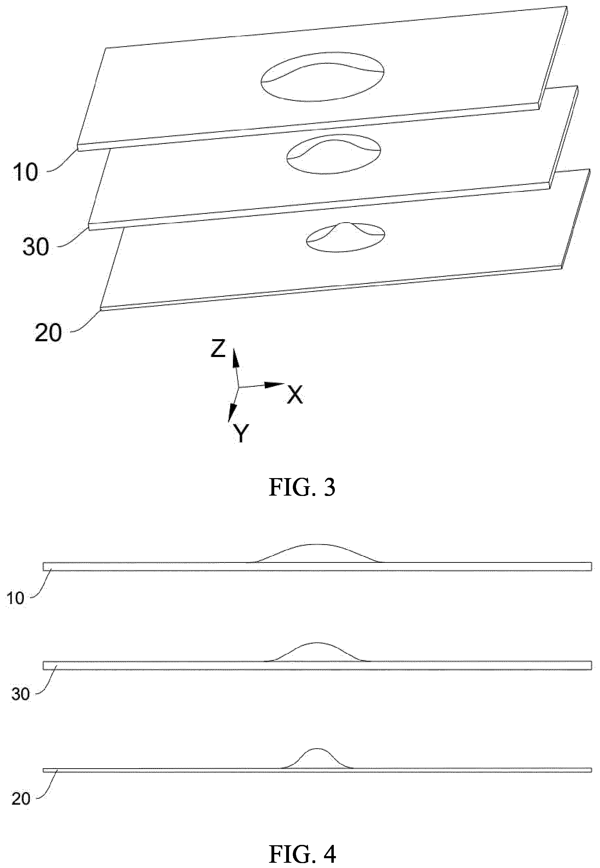

As shown in FIGS. 3 and 4, the bottom guard plate of the multilayer structure is formed on the basis of the upper skin 10, the interlayer 30, and the lower skin 20, so that the bottom guard plate is more in line with the impact resistance principle. When the lower skin 20 is impacted, the reticulated fiber structure in the lower skin 20 can disperse the force in the XY direction, and the intermediate interlayer 30 has a larger force-bearing area when being stressed. Based on the higher strength and the lower tenacity of the interlayer 30 itself, the force can be rapidly dispersed in the XY direction, and the deformation can occur in a wider region of the interlayer 30, whereas the deformation amount in the Z-axis direction is smaller. When the force is transmitted to the upper skin 10, the reticulated fiber structure in the thickened upper skin 10 can pull the interlayer 30 to resist against the Z-axis direction deformation of the entire bottom guard plate. As a result, the Z-axis direction deformation of the entire bottom guard plate is smaller, and the internal structure of the battery pack can be protected. Moreover, since the thickness of the upper skin 10 is larger than the thickness of the lower skin 20, the interlayer 30 can be positioned at a lower position, so that the interlayer 30 can be more quickly enter into the deformation against the external impact force, thereby ensuring the effect of resisting the deformation in the Z-axis direction. Based on the unequal-thickness structural design, the material mechanical properties of the upper skin 10, the interlayer 30, and the lower skin 20 are fully utilized, so that the protective effect of the bottom guard plate with the unequal-thickness structure is better than the protective effect of the bottom guard plate with the equal-thickness structure.

The bottom guard plate of the multi-layer structure formed by the upper skin 10, the interlayer 30, and the lower skin 20 is of a flat plate structure, so that the bottom guard plate has no shape and no hanging point, and it is possible to avoid out-of-control of vehicle rollover when the bottom collision occurs.

**In** some embodiments, the resin layers include one or more of a polyvinyl chloride layer, a polypropylene layer, a polyurethane layer, a polyamide layer, a polycarbonate layer, a polyethylene plastic layer, and a polyphenyl ether layer. When the resin layers include a plurality of types of resin layers, the plurality of types of resin layers are laminated. And/or, the reticulated fiber structure includes one or more of a glass fiber layer, a continuous aramid fiber layer, a basalt fiber layer, and a carbon fiber layer. When the reticulated fiber structures include a plurality of types of reticulated fiber structures, the plurality of types of reticulated fiber structures are provided in a laminated manner.

It will be appreciated that the continuous fiber reinforced resin composite layer has a resin layer and a reticulated fiber structure embedded in the resin layer. The reticulated fiber structure is embedded in the resin layer, and the resin layer can be structurally reinforced so that the upper skin 10 and the lower skin 20 have good tensile strength.

The reticulated fiber structure includes one or more of a glass fiber layer, a continuous aramid fiber layer, a basalt fiber layer, and a carbon fiber layer. The reticulated fiber structures of both the upper skin 10 and the lower skin 20 may be same types of fiber layers or different types of fiber layers. When there are a plurality of reticulated fiber structures in the upper skin 10, the plurality of reticulated fiber structures in the upper skin 10 may be selected from the same types of fiber layers or the different types of fiber layers, and the plurality of reticulated fiber structures are stacked one by one in sequence. When there are a plurality of fiber layers in the lower skin 20, the plurality of fiber layers in the lower skin 20 may be selected from the same types of fiber layers or the different types of fiber layers, and the plurality of reticulated fiber structures are stacked one by one in sequence.

The resin layer includes one or more of a polyvinyl chloride layer, a polypropylene layer, a polyurethane layer, a polyamide layer, a polycarbonate layer, a polyethylene plastic layer, and a polyphenyl ether layer. The resin layers of both the upper skin 10 and the lower skin 20 may be same types of resin layers or different types of the resin layers. When a plurality of resin layers are provided in the upper skin 10, the plurality of resin layers in the upper skin 10 may be selected from the same types of resin layers or the different types of resin layers, and the plurality of resin layers are stacked one by one in sequence. When there are a plurality of resin layers in the lower skin 20, the plurality of resin layers in the lower skin 20 may be selected from the same types of resin layers or the different types of resin layers, and the plurality of resin layers are stacked one by one in sequence.

Based on the selection of the materials of the upper skin 10 and the lower skin 20, the upper skin 10 and the lower skin 20 can be made to have excellent tensile strength and a density of up to 2150 kg/m³. Both the upper skin 10 and the lower skin 20 have good resistance to deformation in the XY direction and are resistant to deformation in the Z-axis direction, and have wear resistance, insulation and corrosion resistance. As a result, the upper skin 10 and the lower skin 20 are made lighter in weight. And, the upper skin 10 and the lower skin 20 can be made thinner, thereby facilitating the light and thin design of the bottom guard plate.

For example, when the resin layer is a polyvinyl chloride layer and the reticulated fiber structure is a glass fiber layer, the glass fiber layer may be embedded directly in the polyvinyl chloride layer to form the continuous fiber reinforced resin composite layer as the upper skin 10 and the lower skin 20.

For example, the resin layer is a polyvinyl chloride layer and a polypropylene layer stacked on each other, and the reticulated fiber structure is a glass fiber layer. In this case, the glass fiber layer may be embedded in both the polyvinyl chloride layer and the polypropylene layer to form a continuous fiber reinforced resin composite layer as the upper skin 10 and the lower skin 20. Alternatively, the glass fiber layer is interposed between the polyvinyl chloride layer and the polypropylene layer to form a continuous fiber reinforced resin composite layer as the upper skin 10 and the lower skin 20.

For example, when the resin layer is a polyvinyl chloride layer, and the reticulated fiber structure is a glass fiber layer and a carbon fiber layer stacked on each other, the glass fiber layer and the carbon fiber layer that are laminated may be embedded in the polyvinyl chloride layer to form a continuous fiber reinforced resin composite layer as the upper skin 10 and the lower skin 20.

For example, the resin layer is a polyvinyl chloride layer and a polypropylene layer which are stacked on each other, and the reticulated fiber structure is a glass fiber layer and a carbon fiber layer which are stacked on each other. In this case, in each of the polyvinyl chloride layer and the polypropylene layer, the glass fiber layer and the carbon fiber layer, which are stacked on each other, may be embedded, so as to form a continuous fiber reinforced resin composite layer as the upper skin 10 and the lower skin 20. Alternatively, the glass fiber layer and the carbon fiber layer stacked on each other are interposed between the polyvinyl chloride layer and the polypropylene layer, so as to form a continuous fiber reinforced resin composite layer as the upper skin 10 and the lower skin 20.

In some embodiments, the thickness of the upper skin 10 is 2 to 3 times the thickness of the lower skin 20, and/or the thickness of the upper skin 10 is 1.2 mm to 3 mm.

The thickness of the upper skin 10 is set to be 2 to 3 times the thickness of the lower skin 20 to ensure that the upper skin 10 has good deformation resistance in the Z-axis direction. At the same time, it is possible to prevent the overthickness of the upper skin 10 from increasing the weight and the cost of the bottom guard plate.

It will be appreciated that, when the thickness of the upper skin 10 is only 1.5 times the thickness of the lower skin 20, the anti-deformation capability of the upper skin 10 in the Z-axis direction cannot meet the use requirements, which may cause a certain safety hazard to the battery pack. When the thickness of the upper skin 10 is four times the thickness of the lower skin 20, the material used for the upper skin 10 and the weight of the upper skin 10 will be larger, resulting in an increase in the weight, the cost, and the thickness of the bottom guard plate as a whole, which is detrimental to the lightweight and low-cost design of the bottom guard plate.

Illustratively, the upper skin 10 has a thickness of 1.2 mm, 1.8 mm, 2 mm, 2.4 mm, 3 mm, or any value therebetween. The thickness of the lower skin 20 is 0.4 mm, 0.6 mm, 1 mm, 1.5 mm, or any value therebetween.

In some embodiments, the interlayer 30 is a steel plate and the interlayer 30 has a thickness of ranging from 0.8 mm to 1.2 mm.

By using the steel plate as the interlayer 30, the steel plate can transmit the action force of the lower skin 20 in the XY direction of the lower skin 20, thereby resisting the deformation in the Z-axis direction to a certain extent, so as to protect the battery cell.

Illustratively, the interlayer 30 has a thickness of 0.8 mm, 1 mm, 1.2 mm, or any value therebetween. When the thickness of the interlayer 30 is less than 0.8 mm, the deformation resistance of the steel plate in the Z-axis direction cannot meet the use requirement, and a certain safety hazard exists in the battery pack. When the thickness of the interlayer 30 is larger than 1.2 mm, the weight of the steel plate is relatively larger, resulting in an increase in the weight, the cost, and the thickness of the entire bottom guard plate, which is disadvantageous to the lightweight and low-cost design of the bottom guard plate.

Illustratively, the interlayer 30 may be a DP780 steel plate, a DP980 steel plate, a DP1180 steel plate, a DP1310 steel plate, a DP1470 steel plate, a HC1200/1500MS steel plate, or a HC1350/1700MS steel plate. As a result, the tensile strength of the interlayer 30 can reach 800MPa~1700MPa (megapascals), the yield strength thereof can reach 800MPa~1500MPa, and the interlayer 30 has the advantages of low toughness, high wear resistance, high rigidity, and the like. As a result, the interlayer 30 is excellent in resisting deformation in the Z-axis direction and resisting piercing.

It will be appreciated that when the lower skin 20 is impacted, the reticulated fiber structure in the lower skin 20 can disperse the force in the XY direction, and the intermediate interlayer 30 has a greater force bearing area when stressed. Based on the high strength and the low toughness of the steel plate itself, the force can be rapidly dispersed in the XY direction of the steel plate, and deformation can occur in a wider area of the steel plate, so that the deformation amount in the Z-axis direction of the steel plate is smaller. When the force is transmitted from the steel plate to the upper skin 10, the reticulated fiber structure in the thickened upper skin 10 can pull the steel plate to resist against the Z-axis direction deformation of the entire bottom guard plate. As a result, the Z-axis direction deformation of the entire bottom guard plate is smaller, and the internal structure of the battery pack can be protected. Since the thickness of the upper skin 10 is larger than the thickness of the lower skin 20, it is possible to locate the steel plate at a lower position, so that the steel plate can be more quickly enter into the deformation against the external impact force, thereby ensuring the effect of resisting the deformation in the Z-axis direction.

In some embodiments, there is an adhesive layer between the interlayer 30 and the upper skin 10; and/or there is an adhesive layer between the interlayer 30 and the lower skin 20.

Based on the fact that the interlayer 30 is a steel plate, and the upper skin 10 and the lower skin 20 are each a continuous fiber reinforced resin composite layers, it is possible to form a reliable connection among the upper skin 10, the interlayer 30 and the lower skin 20 by means of gluing according to the characteristic that the polymer material is excellent in polarity and easy to bond, thereby ensuring the stability of the structure of the bottom guard plate.

For example, when the upper skin 10, the interlayer 30, and the lower skin 20 are bonded, the glue may be applied between the upper skin 10 and the interlayer 30, and the glue may be applied between the lower skin 20 and the interlayer 30. Then, the adhesive area among the upper skin 10, the interlayer 30 and the lower skin 20 is increased by hot pressing, and the adhesive layer is formed by curing the adhesive after the bonding is completed.

For example, when the upper skin 10, the interlayer 30, and the lower skin 20 are bonded, a solid film may be placed between the upper skin 10 and the interlayer 30, and a solid film may be placed between the lower skin 20 and the interlayer 30. The solid film is then softened in a hot pressing manner to bond the upper skin 10, the interlayer 30, and the lower skin 20 to form the adhesive layer. The cure is re-performed to form the bonding layer after the bonding is completed.

The upper skin 10 and the lower skin 20 are attached to the upper and lower sides of the interlayer 30 by bonding and hot pressing, so that the formed bottom guard plate does not need to be subjected to surface treatment, while ensuring that the bottom guard plate has good strength and good rigidity, and has the advantages of light weight and low cost.

As shown in FIGS. 1 and 2, in some embodiments, a buffer portion 40 is provided on a side of the upper skin 10 which is remote from the interlayer 30. The buffer portion 40 can support the battery cell. The buffer portion 40 can perform a certain buffering effect during the assembly of the battery pack and after the battery pack is mounted to the vehicle. For example, when the battery pack is assembled, the buffer portion 40 can support the tray so as to weld and fix the tray and play a buffering effect during the welding of the tray. When the vehicle travels to the depressed road surface, the buffer portion 40 can play a buffering effect for the battery cell to prevent damage to the battery cell.

The buffer portion 40 may be provided in the shape of a cylinder, a cuboid, a prism, an elliptical cylinder, or the like, so as to ensure that the buffer portion 40 can function as a buffering effect.

The buffer portion 40 may be adhesively bonded to the upper skin 10.

In some embodiments, the number of buffer portions 40 is set to be multiple, and the multiple buffer portions 40 are spaced apart on the upper skin 10. The multiple buffer portions 40 may be arrayed or disordered on the upper surface of the upper skin 10. For example, the number of the buffer portions 40 is set to 24, and the 24 buffer portions 40 are uniformly distributed on the upper surface of the upper skin 10 in a 4*6 manner. For example, the number of the buffer portions 40 is set to 18, and the 18 buffer portions 40 are disordered on the upper surface of the upper skin 10.

In some embodiments, the buffer portion 40 includes one or more of a silicone rubber buffer portion, a polyurethane buffer portion, an ethylene-vinyl acetate buffer portion, a polypropylene buffer portion, and an ethylene-propylene-diene rubber buffer portion. The buffer portion 40 has a thickness of ranging from 5 mm to 20 mm.

When the number of the buffer portions 40 is set to multiple, the materials of the multiple buffer portions 40 may be the same or different from each other. Based on the selection of the silicone gel, the polyurethane, the ethylene-vinyl acetate, the polypropylene, or the ethylene-propylene-diene rubber as the buffer portion 40, the buffer portion 40 can be made to have a good buffering effect to ensure the safety of the battery pack.

Illustratively, the buffer portion 40 has a thickness of 5 mm, 10 mm, 15 mm, or 20 mm, or any value therebetween. When the thickness of the buffer portion 40 is less than 5 mm, the buffering effect of the buffer portion 40 will deteriorate, which may cause a case in which the battery cell cannot be protected. When the thickness of the buffer portion 40 is larger than 20 mm, the space occupied by the buffer portion 40 in the thickness direction is larger, so that the overall thickness of the battery pack structure is increased, and the lightweight design of the battery pack is disadvantageous.

Therefore, it is not necessary to use the mold at the production stage, so that the cost of the mold can be saved, the process flow can be simplified, and the process cost can be reduced. At the same time, the weight of the bottom guard plate is lighter, and the design concept of lightening the vehicle is met, so that the endurance of the whole vehicle can be prolonged. The multi-layer structure of the bottom guard plate is designed so as to have good impact resistance, to disperse the external force in the XY direction, and to reduce the deformation in the Z-axis direction, and to protect the battery pack.

In another aspect, embodiments of the present application further provide a battery box. The battery box includes the bottom guard plate.

In the embodiments of the present application, the bottom guard plate with the multilayer structure is formed on the basis of the upper skin 10, the interlayer 30, and the lower skin 20, so that the strength of the bottom guard plate is enhanced, and the impact resistance and deformation resistance thereof are enhanced. Based on the fact that the thickness of the upper skin 10 is larger than that of the lower skin 20, on the one hand, the upper skin 10 is better able to resist deformation in the thickness direction, and it is ensured that the bottom guard plate can meet the use requirements. On the other hand, the use amount of the material of the lower skin 20 is reduced, so that the bottom guard plate as a whole is thinner and lighter. Thus, the production cost is reduced while ensuring that the overall strength of the bottom guard plate meets the standard.

## Claims

1. A bottom guard plate comprising:
an upper skin (10);
a lower skin (20) spaced from the upper skin;
an interlayer (30) sandwiched between the upper skin and the lower skin;
wherein a thickness of the upper skin is greater than a thickness of the lower skin.

2. The bottom guard plate according to claim 1, wherein the thickness of the upper skin (10) is 2 to 3 times the thickness of the lower skin (20); and/or the thickness of the upper skin (10) is 1.2 mm to 3 mm.

3. The bottom guard plate according to claim 1 or 2, wherein the upper skin (10) and the lower skin (20) are each one or more resin layers, and the one or more resin layers are each embedded with a reticulated fiber structure.

4. The bottom guard plate according to claim 3, wherein the resin layer comprises one or more of a polyvinyl chloride layer, a polypropylene layer, a polyurethane layer, a polyamide layer, a polycarbonate layer, a polyethylene plastic layer, and a polyphenyl ether layer; and/or the reticulated fiber structure comprises one or more of a glass fiber layer, a continuous aramid fiber layer, a basalt fiber layer, and a carbon fiber layer.

5. The bottom guard plate according to claim 3 or 4, wherein the one or more resin layers comprise a plurality of types of resin layers, and the plurality of types of resin layers are stacked; and/or, the one or more reticulated fiber structures comprise a plurality of types of reticulated fiber structures, and the plurality of types of reticulated fiber structures are stacked.

6. The bottom guard plate according to any one of claims 1 to 5, wherein the interlayer (30) is a steel plate, and the interlayer has a thickness of ranging from 0.8 mm to 1.2 mm.

7. The bottom guard plate according to any one of claims 1 to 6, wherein an adhesive layer is provided between the interlayer and the upper skin, and/or another adhesive layer is provided between the interlayer and the lower skin.

8. The bottom guard plate according to any one of claims 1 to 7, wherein a side of the upper skin remote from the interlayer is provided with one or more buffer portions (40), wherein the one or more buffer portions comprise a plurality of buffer portions, and the plurality of buffer portions are spaced apart from each other on the upper skin.

9. The bottom guard plate according to claim 8, wherein the buffer portion (40) includes one or more of a silicone rubber buffer portion, a polyurethane buffer portion, an ethylene-vinyl acetate buffer portion, a polypropylene buffer portion, and an ethylene-propylene-diene rubber buffer portion.

10. The bottom guard plate according to claim 8 or 9, wherein the buffer portion (40) has a thickness of ranging from 5 mm to 20 mm.

11. A battery box comprising the bottom guard plate according to any one of claims 1 to 10.
